# EUROPEAN PATENT APPLICATION

(11) **EP 4 699 801 A1**
(43) Date of publication of application: **25.02.2026**
(21) Application number: 24792571.2
(22) Date of filing: 10.04.2024
(51) Int. Cl.: B32B 27/10, B65D 65/40, D21H 19/08, D21H 19/36, D21H 19/84, D21H 27/30

(54) **BASE PAPER FOR METALLIZED PAPER, METALLIZED PAPER, AND PACKAGING BAG**

(30) Priority: 20.04.2023 JP 2023069150
(71) Applicant: Oji Holdings Corporation, Chuo-ku Tokyo 104-0061 (JP)
(72) Inventor: NOISHIKI, Yasutomo, Tokyo 104-0061 (JP); SHAMOTO, Yuta, Tokyo 104-0061 (JP); NAMIOKA, Moeka, Tokyo 104-0061 (JP); MIYAKE, Yutaro, Tokyo 104-0061 (JP)
(74) Representative: Godemeyer Blum Lenze Patentanwälte Partnerschaft mbB - werkpatent
(86) International application number: PCT/JP2024/014461
(87) International publication number: WO 2024/219296

(57) **Abstract**

Provided are: base paper for vapor deposition paper, which has excellent printability and excellent processing suitability in automatic packaging; and vapor deposition paper formed using the base paper. The base paper for vapor deposition paper has a resin layer on one surface of a paper substrate and is for forming a vapor deposition layer on the resin layer, in which the base paper for vapor deposition paper has a pigment coating layer on the other surface of the paper substrate, a content of a pigment in the pigment coating layer is 50% by mass or more and 85% by mass or less, and the surface having the pigment coating layer has an Oken type smoothness of 300 seconds or more and a coefficient of kinetic friction against stainless steel of 0.35 or less. The vapor deposition paper has a vapor deposition layer on a resin layer of a base paper for the vapor deposition paper having the resin layer on one surface of a paper substrate and a pigment coating layer on the other surface of the paper substrate, in which a content of a pigment in the pigment coating layer is 50% by mass or more and 85% by mass or less, and the surface having the pigment coating layer has an Oken type smoothness of 300 seconds or more and a coefficient of kinetic friction against stainless steel of 0.35 or less.

## Description

### TECHNICAL FIELD

The present invention relates to base paper for vapor deposition paper, vapor deposition paper using the base paper, and a packaging bag formed using the vapor deposition paper.

### BACKGROUND ART

In the related art, a packaging material including a paper substrate with a water vapor barrier property to block water vapor and a gas barrier property to block a gas other than water vapor, especially an oxygen barrier property to block oxygen, has been used for packaging food, a medical product, an electronic component, and the like in order to prevent quality degradation of contents.

Vapor deposition paper is obtained by providing a vapor deposition layer made of metal or the like on a paper substrate in order to improve the barrier properties of the paper substrate against oxygen and water vapor.

JP 6958756 B discloses base paper for vapor deposition paper, which is for forming a vapor deposition layer by vapor deposition and has a coating layer having a clay coat layer and a resin layer containing a water-suspendable polyurethane-based resin in this order from the paper substrate side on at least one surface of a paper substrate, in which the Cobb water absorptiveness of the surface having the coating layer is in a specific range, and the contact angle of the surface of the coating layer with water is a specific value or less. JP 6958757 B discloses base paper for vapor deposition paper, which is for forming a vapor deposition layer by vapor deposition and has a clay coat layer and a resin layer in this order on at least one surface of a paper substrate, in which a wetting tension of a surface of the resin layer is a specific value or more and a surface roughness is a specific value or less.

### SUMMARY OF INVENTION

Vapor deposition paper as a packaging material for food and the like is required to have excellent printability of a printing surface, and in particular, to have excellent processing suitability in automatic packaging when used as a packaging bag.

Therefore, an object of the present invention is to provide base paper for vapor deposition paper, which provides vapor deposition paper excellent in printability and processing suitability in automatic packaging, and vapor deposition paper formed using the same. Another object of the present invention is to provide a packaging bag formed using the vapor deposition paper.

The present invention has the following configurations <1> to <11>.
<1> Base paper for vapor deposition paper, which has a resin layer on one surface of a paper substrate and is for forming a vapor deposition layer on the resin layer, in which the base paper for vapor deposition paper has a pigment coating layer on the other surface of the paper substrate, a content of a pigment in the pigment coating layer is 50% by mass or more and 85% by mass or less, and the surface having the pigment coating layer has an Oken type smoothness of 300 seconds or more and a coefficient of kinetic friction against stainless steel of 0.35 or less.
<2> The base paper for vapor deposition paper according to <1>, further having a clay coat layer between the paper substrate and the resin layer.
<3> The base paper for vapor deposition paper according to <1> or <2>, in which the resin layer contains at least one selected from the group consisting of a water-suspendable polyurethane-based resin and a water-suspendable polyester-based resin.
<4> The vapor deposition paper according to <1> or <2>, in which the resin layer contains a water-soluble polyvinyl alcohol-based resin.
<5> Vapor deposition paper having a vapor deposition layer on a resin layer of base paper for the vapor deposition paper having the resin layer on one surface of a paper substrate and a pigment coating layer on the other surface of the paper substrate, in which a content of a pigment in the pigment coating layer is 50% by mass or more and 85% by mass or less, and the surface having the pigment coating layer has an Oken type smoothness of 300 seconds or more and a coefficient of kinetic friction against stainless steel of 0.35 or less.
<6> The vapor deposition paper according to <5>, further having a heat seal layer on the vapor deposition layer.
<7> The vapor deposition paper according to <6>, further having an overcoat layer between the vapor deposition layer and the heat seal layer.
<8> The vapor deposition paper according to any one of <5> to <7>, further having a clay coat layer between the paper substrate and the resin layer.
<9> The vapor deposition paper according to any one of <5> to <8>, in which the resin layer contains at least one selected from the group consisting of a water-suspendable polyurethane-based resin and a water-suspendable polyester-based resin.
<10> The vapor deposition paper according to any one of <5> to <8>, in which the resin layer contains a water-soluble polyvinyl alcohol-based resin.
<11> A packaging bag formed using the vapor deposition paper according to any one of <5> to <10>.

### DESCRIPTION OF EMBODIMENTS

### [Base Paper for Vapor Deposition Paper]

The base paper for vapor deposition paper according to the present embodiment (hereinafter also simply referred to as the base paper for vapor deposition paper) has a resin layer on one surface of a paper substrate and is for forming a vapor deposition layer on the resin layer, in which the base paper for vapor deposition paper has a pigment coating layer on the other surface of the paper substrate, a content of a pigment in the pigment coating layer is 50% by mass or more and 85% by mass or less, and the surface having the pigment coating layer has an Oken type smoothness of 300 seconds or more and a coefficient of kinetic friction against stainless steel of 0.35 or less. According to the base paper for vapor deposition paper of the present embodiment, vapor deposition paper excellent in printability and processing suitability in automatic packaging is obtained. Although the reason is not clear, it is considered that, according to the base paper for vapor deposition paper of the present embodiment, a pigment coating layer is provided on the other surface of the paper substrate, the smoothness of the surface is increased so that the Oken type smoothness becomes a predetermined value or more, and the coefficient of kinetic friction with respect to stainless steel is reduced so that the coefficient of kinetic friction against stainless steel becomes a predetermined value or less, thereby providing vapor deposition paper excellent in printability and processing suitability in automatic packaging. The effects of the present invention are not limited by the above mechanism.

Hereinafter, configurations and physical properties of the base paper for vapor deposition paper according to the present embodiment will be described in more detail. In the description herein, a numerical range represented by "X to Y" means a numerical range including X as a lower limit value and Y as an upper limit value. When numerical ranges are described in stages, the upper limit and the lower limit of each numerical range can be freely combined. The term "(meth)acrylic" is a generic term including both acrylic and methacrylic.

The base paper for vapor deposition paper according to the present embodiment has a resin layer on one surface of a paper substrate, can form a vapor deposition layer on the resin layer, and has a pigment coating layer on the other surface of the paper substrate.

The base paper for vapor deposition paper according to the present embodiment preferably has a clay coat layer between one surface of the paper substrate and the resin layer from the viewpoint of smoothing the surface of the paper substrate. That is, the base paper for vapor deposition paper according to the present embodiment preferably has a clay coat layer on one surface of the paper substrate and a resin layer on the clay coat layer.

### <Paper Substrate>

Pulp constituting the paper substrate in the present embodiment preferably contains plant-derived pulp as a main component, and more preferably contains wood pulp as a main component. Examples of the wood pulp include hardwood pulp and softwood pulp. Examples of non-wood pulp include cotton pulp, hemp pulp, kenaf pulp, and bamboo pulp. A material other than a pulp fiber, such as a synthetic fiber including a rayon fiber and a nylon fiber, may also be blended as a secondary paper material as long as the effects of the present invention are not impaired.

The proportion of the hardwood pulp in the pulp constituting the paper substrate is preferably 65% by mass or more, more preferably 80% by mass or more, still more preferably 90% by mass or more, and yet still more preferably 95% by mass or more, and may be 100% by mass, from the viewpoint of the formation, physical properties, and recyclability of the vapor deposition paper.

The paper substrate may contain an internal sizing agent in addition to the pulp, and examples of the internal sizing agent include rosin-based sizing agents, alkyl ketene dimer-based sizing agents, alkenyl succinic anhydride-based sizing agents, styrene-unsaturated carboxylic acid-based sizing agents, higher fatty acid-based sizing agents, and petroleum resin-based sizing agents. The content of the internal sizing agent is not particularly limited, and is preferably 0 parts by mass or more and 3 parts by mass or less with respect to 100 parts by mass of pulp (absolute dry mass) in the paper substrate.

In addition to the internal sizing agent, other known internal additives may be added to the paper substrate. Examples of the other internal additives include a filler, a paper strengthening agent, a retention aid, a pH adjuster, a drainage aid, a water-resistant agent, a softener, an antistatic agent, a defoaming agent, a slime control agent, a dye, and a pigment.

Examples of the filler include titanium dioxide, kaolin, talc, calcium carbonate (heavy calcium carbonate, light calcium carbonate), calcium sulfite, gypsum, calcined kaolin, white carbon, amorphous silica, delaminated kaolin, diatomaceous earth, magnesium carbonate, aluminum hydroxide, calcium hydroxide, magnesium hydroxide, and zinc hydroxide.

The paper substrate is obtained by papermaking a papermaking raw material containing a pulp slurry as a main component. The pulp slurry can be obtained from wood or non-wood raw material chips through steps such as cooking, washing, and bleaching. Methods used in a cooking step, a washing step, a bleaching step, and the like are not particularly limited. The pulp slurry obtained through the steps is preferably further beaten in the presence of water.

In the papermaking of the paper substrate, a known wet paper machine can be appropriately selected and used. Examples of the papermaking machine include a fourdrinier paper machine, a gap former type paper machine, a cylinder paper machine, and a tanmo machine. A paper layer formed by the paper machine is preferably, for example, conveyed by felt and dried with a dryer. A multi-stage cylinder dryer may be used as a pre-dryer before drying with a dryer.

The paper substrate obtained as described above may be subjected to a surface treatment with a calender to achieve uniformity in paper thickness and gloss profile. As the calender treatment, a known calender treatment machine can be appropriately selected and used.

Specific examples of the paper substrate used for the base paper for vapor deposition paper according to the present embodiment include bleached kraft paper, unbleached kraft paper, woodfree paper, paperboard, liner paper, coated paper, one-side machine glazed paper, glassine paper, and Graphan paper. Among them, bleached kraft paper, unbleached kraft paper, woodfree paper, and one-side machine glazed paper are preferred.

### (Stockigt Sizing Degree)

The Stockigt sizing degree of the paper substrate is not particularly limited, and from the viewpoint of improving barrier properties, the Stockigt sizing degree of at least a surface on the side on which a resin layer described later is provided is preferably 1 second or more, more preferably 3 seconds or more, and still more preferably 5 seconds or more, and the upper limit thereof is not particularly limited, and from the viewpoint of ease of production of the paper substrate, the Stockigt sizing degree of the paper substrate is preferably 100 seconds or less, and more preferably 30 seconds or less. That is, the Stockigt sizing degree of the paper substrate is preferably 1 to 100 seconds, more preferably 3 to 30 seconds, and still more preferably 5 to 30 seconds. The Stockigt sizing degree of the paper substrate is measured in accordance with JIS P 8122:2004. The Stockigt sizing degree of the paper substrate can be controlled according to the type and content of an internal sizing agent, the type of pulp, a smoothing treatment, and the like.

### (Basis Weight)

The basis weight of the paper substrate is not particularly limited, and is preferably 20 g/m² or more, more preferably 30 g/m² or more, and still more preferably 40 g/m² or more, from the viewpoint of the strength when used as a packaging bag, and the basis weight of the paper substrate is preferably 500 g/m² or less, more preferably 400 g/m² or less, still more preferably 200 g/m² or less, and yet still more preferably 100 g/m² or less, from the viewpoint of economic efficiency and ease of production. That is, the basis weight of the paper substrate is preferably 20 to 500 g/m², more preferably 20 to 400 g/m², still more preferably 30 to 200 g/m², and yet still more preferably 40 to 100 g/m². The basis weight of the paper substrate is measured in accordance with JIS P 8124:2011.

### (Thickness)

The thickness of the paper substrate is not particularly limited, and is preferably 5 µm or more, more preferably 10 µm or more, still more preferably 30 µm or more, and yet still more preferably 50 µm or more from the viewpoint of strength when used as a packaging bag, and is preferably 150 µm or less, more preferably 100 µm or less, and still more preferably 75 µm or less from the viewpoint of economic efficiency and ease of production. That is, the thickness of the paper substrate is preferably 5 to 150 µm, more preferably 10 to 100 µm, still more preferably 30 to 100 µm, and yet still more preferably 50 to 75 µm. The thickness of the paper substrate is measured in accordance with JIS P 8118:2014.

### (Density)

From the viewpoint of molding processability, the density of the paper substrate is preferably 0.5 g/cm³ or more, more preferably 0.6 g/cm³ or more, and still more preferably 0.7 g/cm³ or more, and is preferably 1.2 g/cm³ or less, and more preferably 1.0 g/cm³ or less. That is, the density of the paper substrate is preferably 0.5 to 1.2 g/cm³, more preferably 0.6 to 1.2 g/cm³, and still more preferably 0.7 to 1.0 g/cm³. The density of the paper substrate is calculated based on the basis weight and thickness of the paper substrate measured by the methods described above.

### (Oken Type Smoothness)

With regard to the Oken type smoothness of the paper substrate, from the viewpoint of obtaining a uniform vapor deposition layer, the Oken type smoothness of at least the surface on the side where the vapor deposition layer is provided (that is, the resin layer surface) is preferably 5 seconds or more, and more preferably 10 seconds or more, and the upper limit thereof is not particularly limited, and is, for example, preferably 1000 seconds or less. That is, the Oken type smoothness of the paper substrate is preferably 5 to 1000 seconds, and more preferably 10 to 1000 seconds. The Oken type smoothness of the paper substrate is measured in accordance with JIS P 8155:2010.

From the above-described viewpoint, in the paper substrate, the Stockigt sizing degree of the surface on the side on which the resin layer is provided (resin layer surface) is preferably 1 to 100 seconds, more preferably 3 to 100 seconds, and still more preferably 5 to 30 seconds, the basis weight is preferably 20 to 500 g/m², more preferably 20 to 400 g/m², still more preferably 30 to 200 g/m², and yet still more preferably 40 to 100 g/m², the thickness is preferably 5 to 150 µm, more preferably 10 to 100 µm, still more preferably 30 to 100 µm, and yet still more preferably 50 to 75 µm, the density is preferably 0.5 to 1.2 g/cm³, more preferably 0.6 to 1.2 g/cm³, and still more preferably 0.7 to 1.0 g/cm³, and the Oken type smoothness of the resin layer surface is preferably 5 to 1000 seconds, and more preferably 10 to 1000 seconds.

### <Resin Layer>

It is preferable that the base paper for vapor deposition paper according to the present embodiment has a resin layer on one surface of the paper substrate and has a resin layer on the clay coat layer described later. By providing the resin layer, the adhesiveness between the vapor deposition layer of the vapor deposition paper and the paper substrate of the base paper for vapor deposition paper is improved, and the barrier property is improved. In addition, since the resin layer has an oxygen barrier property and a water vapor barrier property, the resin layer also has a function of improving the barrier property in the case of forming the vapor deposition paper.

The resin layer preferably contains one or more selected from the group consisting of a water-suspendable polymer and a water-soluble polymer, more preferably mainly contains a water-suspendable polymer or a water-soluble polymer, and still more preferably mainly contains a water-suspendable polymer. The expression "the resin layer mainly contains a water-suspendable polymer" means that a content of the water-suspendable polymer in the resin layer is, for example, 50% by mass or more, preferably 60% by mass or more, more preferably 70% by mass or more, still more preferably 80% by mass or more, yet still more preferably 90% by mass or more, and particularly preferably 95% by mass or more. The upper limit thereof is not particularly limited, is 100% by mass. The expression "the resin layer mainly contains a water-soluble polymer" means that a content of the water-soluble polymer in the resin layer is, for example, 50% by mass or more, preferably 60% by mass or more, more preferably 70% by mass or more, still more preferably 80% by mass or more, yet still more preferably 90% by mass or more, and particularly preferably 95% by mass or more. The upper limit thereof is not particularly limited, and is 100% by mass. In the description herein, the term "water-suspendable" means that the polymer is suspended in water but has a solubility of less than 1 g in 100 g of water at 25°C. In addition, the term "water-soluble" means that the polymer has a solubility of 1 g or more in 100 g of water at 25°C. The resin layer may further contain an optional component in addition to the water-suspendable polymer or the water-soluble polymer.

### (Water-Suspendable Polymer)

Examples of the water-suspendable polymer contained in the resin layer include, but are not particularly limited to, an alkyd resin; a (meth)acrylic (co)polymer, a styrene-(meth)acrylic resin; an olefin-unsaturated carboxylic acid-based copolymer such as an ethylene-acrylic acid copolymer and an ethylene-methacrylic acid copolymer; a polyvinyl alcohol-based resin such as an ethylene-vinyl alcohol copolymer; a cellulose-based resin; a cellulose nanofiber; a cellulose nanocrystal; a polyurethane-based resin; and a polyester-based resin. These may be used alone, or two or more kinds thereof may be used in combination. Among these, the water-suspendable polymer is preferably one or more selected from the group consisting of a water-suspendable polyvinyl alcohol-based resin, a water-suspendable polyurethane-based resin, and a water-suspendable polyester-based resin, and more preferably one or more selected from the group consisting of a water-suspendable polyurethane-based resin and a water-suspendable polyester-based resin.

### <<Water-Suspendable Polyurethane-based Resin>>

The water-suspendable polyurethane-based resin contained in the resin layer is not particularly limited, and it is preferable that the water-suspendable polyurethane-based resin can be prepared into one or more kinds selected from the group consisting of a polyurethane-based resin dispersion and a polyurethane-based resin emulsion, it is more preferable that the water-suspendable polyurethane-based resin can be prepared into a polyurethane-based resin dispersion or a polyurethane-based resin emulsion, and it is still more preferable that the water-suspendable polyurethane-based resin can be prepared into a polyurethane-based resin dispersion.

The water-suspendable polyurethane-based resin contained in the resin layer preferably contains at least one selected from the group consisting of a structural unit derived from meta-xylylene diisocyanate and a structural unit derived from hydrogenated meta-xylylene diisocyanate. When the polyurethane-based resin contains at least one of the structural unit derived from meta-xylylene diisocyanate and the structural unit derived from hydrogenated meta-xylylene diisocyanate, a total content of the structural unit derived from meta-xylylene diisocyanate and the structural unit derived from hydrogenated meta-xylylene diisocyanate is preferably 50 mol% or more with respect to a total amount of structural units derived from a polyisocyanate. Such a polyurethane-based resin exhibits a high cohesive force due to a hydrogen bond and a stacking effect between xylylene groups, and thus has an excellent gas barrier property. The content can be identified by using a known analysis method such as ¹H-NMR.

### - Oxygen Permeability -

The water-suspendable polyurethane-based resin contained in the resin layer preferably has an oxygen permeability of 100 mL/(m²·day·atm) or less, more preferably 50 mL/(m²·day·atm) or less, still more preferably 25 mL/(m²·day·atm) or less, yet still more preferably 10 mL/(m²·day·atm) or less, and even yet still more preferably 5 mL/(m²·day·atm) or less at 23°C and 50% RH when converted into a sheet having a thickness of 25 µm. In a case where the oxygen permeability of the resin layer is low, an excellent gas barrier property is imparted to the base paper for vapor deposition paper, which is preferable. In the description herein, the oxygen permeability is measured using an oxygen permeability measuring device (OX-TRAN 2/22, manufactured by MOCON Inc.) under conditions of 23°C and 50% RH.

### - Glass Transition Temperature -

The glass transition temperature of the water-suspendable polyurethane-based resin contained in the resin layer is preferably 150°C or lower, more preferably 140°C or lower, and still more preferably 135°C or lower, from the viewpoint of increasing the film formability in order to protect the vapor deposition layer of the vapor deposition paper described later, and the lower limit thereof is not particularly limited, but is preferably 50°C or higher. The glass transition temperature of the water-suspendable polyurethane-based resin is measured in accordance with JIS K 7122:2012.

From the above viewpoint, the water-suspendable polyurethane-based resin contained in the resin layer preferably has an oxygen permeability of 100 mL/(m²·day·atm) or less, more preferably 50 mL/(m²·day·atm) or less, still more preferably 25 mL/(m²·day·atm) or less, yet still more preferably 10 mL/(m²·day·atm) or less, and even yet still more preferably 5 mL/(m²·day·atm) or less at 23°C and 50% RH when converted into a sheet having a thickness of 25 µm, and preferably has a glass transition temperature of 50 to 150°C, more preferably 50 to 140°C, and still more preferably 50 to 135°C.

As the water-suspendable polyurethane-based resin, a synthetic product may be used, and examples thereof include a polyurethane-based resin described in WO 2015/016069.

As the water-suspendable polyurethane-based resin, a commercially available product may be used, and examples thereof include "TAKELAC W (trade name)", "TAKELAC WPB (trade name)", and "TAKELAC WS (trade name)" manufactured by Mitsui Chemicals, Inc. Specific examples thereof include "TAKELAC WPB-341 (trade name)". Examples of other commercially available products thereof include "HPU W-003 (trade name)" (hydroxyl value: 235 mgKOH/g) manufactured by Dainichiseika Color & Chemicals Manufacturing Co., Ltd.

### <<Water-Suspendable Polyester-based Resin>>

The water-suspendable polyester-based resin contained in the resin layer is not particularly limited, and it is preferable that the water-suspendable polyester-based resin can be prepared into one or more kinds selected from the group consisting of a polyester-based resin dispersion and a polyester-based resin emulsion, it is more preferable that the water-suspendable polyester-based resin can be prepared into a polyester-based resin dispersion or a polyester-based resin emulsion, and it is still more preferable that the water-suspendable polyester-based resin can be prepared into a polyester-based resin dispersion.

### - Acid Value -

The acid value of the water-suspendable polyester-based resin is preferably 1 mgKOH/g or more, more preferably 3 mgKOH/g or more, still more preferably 5 mgKOH/g or more, and yet still more preferably 6 mgKOH/g or more from the viewpoint of more excellent adhesiveness to the vapor deposition layer described later, and the upper limit thereof is not particularly limited, and is preferably 100 mgKOH/g or less, more preferably 50 mgKOH/g or less, still more preferably 20 mgKOH/g or less, and yet still more preferably 15 mgKOH/g or less. The acid value of the water-suspendable polyester-based resin is measured in accordance with JIS K 0700:1992.

### - Hydroxyl Value -

The hydroxyl value of the water-suspendable polyester-based resin is preferably 0.5 mgKOH/g or more, more preferably 1 mgKOH/g or more, still more preferably 1.5 mgKOH/g or more, and yet still more preferably 2 mgKOH/g or more from the viewpoint of more excellent adhesiveness to the vapor deposition layer described later, and the upper limit is not particularly limited, and is preferably 100 mgKOH/g or less, more preferably 50 mgKOH/g or less, still more preferably 20 mgKOH/g or less, and yet still more preferably 10 mgKOH/g or less. The hydroxyl value of the water-suspendable polyester-based resin is measured in accordance with JIS K 0700:1992.

### - Glass Transition Temperature -

The glass transition temperature of the water-suspendable polyester-based resin contained in the resin layer is preferably 150°C or lower, more preferably 140°C or lower, and still more preferably 135°C or lower, from the viewpoint of increasing the film formability in order to protect the vapor deposition layer of the vapor deposition paper described later, and the lower limit thereof is not particularly limited, and is preferably 50°C or higher. The glass transition temperature of the water-suspendable polyester-based resin is measured in accordance with JIS K 7122:2012.

The water-suspendable polyester-based resin contained in the resin layer has an acid value of preferably 1 to 100 mgKOH/g, more preferably 3 to 50 mgKOH/g, still more preferably 5 to 20 mgKOH/g, and yet still more preferably 6 to 15 mgKOH/g, a hydroxyl value of preferably 0.5 to 100 mgKOH/g, more preferably 1 to 50 mgKOH/g, still more preferably 1.5 to 20 mgKOH/g, and yet still more preferably 2 to 10 mgKOH/g, and a glass transition temperature of preferably 50 to 150°C, more preferably 50 to 140°C, and still more preferably 50 to 135°C.

As the water-suspendable polyester-based resin, a commercially available product may be used, and examples thereof include "elitel KT series (trade name)" manufactured by Unitika Ltd. and "LANDY PL series (trade name)" manufactured by Miyoshi Oil & Fat Co., Ltd. Specific examples thereof include "elitel KT-8803 (trade name)" and "LANDY PL-3000 (trade name)".

### (Water-Soluble Polymer)

The water-soluble polymer contained in the resin layer is not particularly limited, and examples thereof include a polyvinyl alcohol-based resin such as a polyvinyl alcohol and an ethylene-modified polyvinyl alcohol, starch, a starch derivative, a water-soluble polysaccharide such as carboxymethyl cellulose, methyl cellulose, and hydroxypropylmethyl cellulose, a polyacrylic acid-based resin, a polyamine resin, and a polyamide resin. Among these, from the viewpoint of availability and economic efficiency, one or more selected from the group consisting of a polyvinyl alcohol-based resin, a water-soluble polysaccharide, and a polyacrylic acid-based resin are preferable, and from the viewpoint of an oxygen barrier property, a polyvinyl alcohol-based resin is more preferable, and an ethylene-modified polyvinyl alcohol is still more preferable.

The saponification degree of the polyvinyl alcohol-based resins is preferably 95 mol% or more, and more preferably 98 mol% or more, from the viewpoint of increasing water resistance after film formation and stably exhibiting an oxygen barrier property. The saponification degree is measured based on JIS K 6726-1994.

As the water-soluble polyvinyl alcohol-based resin, a commercially available product may be used, and examples thereof include "EXCEVAL AQ-4104 (trade name)" and "EXCEVAL HR-3010 (trade name)" manufactured by Kuraray Co., Ltd., and "GOHSENOL NH-18 (trade name)" and "Nichigo G-Polymer OKS-8118 (trade name)" manufactured by Mitsubishi Chemical Corporation. As the water-soluble polysaccharide, a commercially available product may be used, and examples thereof include "CELLOGEN F5-A (trade name)" manufactured by DKS Co., Ltd. and "METOLOSE SM (trade name)" and "METOLOSE 60SH (trade name)" manufactured by Shin-Etsu Chemical Co., Ltd. As the water-soluble polyacrylic acid-based resin, a commercially available product may be used, and examples thereof include "ARON A-30 (trade name)" and "JURYMER AC-10P (trade name)" manufactured by Toagosei Co., Ltd.

### (Silane Coupling Agent)

From the viewpoint of improving the bending resistance of the resin layer and further improving the processing suitability, the resin layer may be formed by blending a silane coupling agent in addition to the above-described water-suspendable polymer.

The silane coupling agent is a compound having at least one alkoxysilyl group and at least one reactive functional group other than the alkoxysilyl group in one molecule. The alkoxysilyl group may be any one of a monoalkoxysilyl group, a dialkoxysilyl group, and a trialkoxysilyl group, and from the viewpoint of reactivity, a trialkoxysilyl group is preferable.

Examples of the reactive functional group other than the alkoxysilyl group include a vinyl group, an epoxy group, a styryl group, a (meth)acryloyloxy group, an amino group, an isocyanato group, a ureido group, and an acid anhydride group. Among them, an amino group, an epoxy group, and an acid anhydride group are preferable, and an amino group is more preferable.

Examples of an epoxy group-containing silane coupling agent include 3-glycidoxypropyltrimethoxysilane, 3-glycidoxypropyltriethoxysilane, 3-glycidoxypropylmethyldiethoxysilane, and 2-(3,4-epoxycyclohexyl)ethyltrimethoxysilane.

Examples of an amino group-containing silane coupling agent include 3-aminopropyltrimethoxysilane, 3-aminopropyltriethoxysilane, N-2-(aminoethyl)-3-aminopropylmethyldimethoxysilane, N-2-(aminoethyl)-3-aminopropyltrimethoxysilane, 3-triethoxysilyl-N-(1,3-dimethylbutylidene)propylamine, and N-phenyl-3-aminopropyltrimethoxysilane. Among them, 3-aminopropyltriethoxysilane is preferable.

Examples of an acid anhydride group-containing silane coupling agent include 3-trimethoxysilylpropyl succinic anhydride.

As the silane coupling agent, a commercially available product may be used, and examples thereof include KBM-303, KBM-402, KBM-403, KBE-402, KBE-403, KBM-602, KBM-603, KBM-903, KBE-903, KBE-9103P, KBM-573, and X-12-967C manufactured by Shin-Etsu Chemical Co., Ltd.

A blending amount of the silane coupling agent is preferably 0.03 parts by mass or more, more preferably 0.1 parts by mass or more, still more preferably 0.2 parts by mass or more, and particularly preferably 0.3 parts by mass or more, and is also preferably 10 parts by mass or less, more preferably 8 parts by mass or less, still more preferably 6 parts by mass or less, and particularly preferably 5 parts by mass or less, with respect to 100 parts by mass of the water-suspendable polymer and the water-soluble polymer.

### (Optional Component)

Examples of the optional component that can be contained in the resin layer include other resins and additives. Examples of the additive include an anti-foaming agent, a surfactant, a pigment, an antioxidant, an antistatic agent, a dye, a plasticizer, a lubricant, and a release agent.

The coating amount of the resin layer is not particularly limited, and is preferably 0.1 g/m² or more, more preferably 0.5 g/m² or more, and still more preferably 0.7 g/m² or more, and is preferably 10 g/m² or less, more preferably 5 g/m² or less, and still more preferably 3 g/m² or less in terms of the solid content. That is, the coating amount of the resin layer is preferably 0.1 to 10 g/m², more preferably 0.5 to 5 g/m², and still more preferably 0.7 to 3 g/m² in terms of the solid content. The method for forming the resin layer is not particularly limited, and the resin layer is preferably formed by applying an aqueous coating liquid containing a water-suspendable polymer, followed by drying.

### <Clay Coat Layer>

As described above, it is preferable that the base paper for vapor deposition paper according to the present embodiment has a clay coat layer between the paper substrate and the resin layer. Thereby, the paper substrate can be sealed, the surface on which the resin layer is formed can be smoothed, and a flatter resin layer is formed, and as a result, a uniform vapor deposition layer can be formed when a vapor deposition paper described later is formed, and the barrier property is improved.

The clay coat layer preferably contains an inorganic pigment and a binder, and more preferably the clay coat layer is mainly composed of an inorganic pigment and a binder. The expression "the clay coat layer is mainly composed of an inorganic pigment and a binder" means that a total content of the inorganic pigment and the binder in the clay coat layer is, for example, 50% by mass or more, preferably 60% by mass or more, more preferably 70% by mass or more, still more preferably 80% by mass or more, yet still more preferably 90% by mass or more, and particularly preferably 95% by mass or more. The upper limit thereof is not particularly limited, and is 100% by mass. The clay coat layer may further contain an optional component in addition to the inorganic pigment and the binder.

### (Inorganic Pigment)

The inorganic pigment contained in the clay coat layer is not particularly limited, and examples thereof include kaolin, talc, and mica, and kaolin is preferable. The content of the inorganic pigment in the clay coat layer is preferably 50% by mass or more, more preferably 60% by mass or more, and still more preferably 65% by mass or more, and is preferably 98% by mass or less, more preferably 90% by mass or less, and still more preferably 80% by mass or less. That is, the content of the inorganic pigment in the clay coat layer is preferably 50 to 98% by mass, more preferably 60 to 90% by mass, and still more preferably 65 to 80% by mass.

### <<Aspect Ratio>>

From the viewpoint of forming a uniform and smooth resin layer, the aspect ratio of the inorganic pigment is preferably 50 or less, and more preferably 45 or less, and the lower limit thereof is not particularly limited, and is preferably 1 or more, and more preferably 5 or more. The aspect ratio of the inorganic pigment is measured by observation with an electron microscope or X-ray diffraction measurement.

### <<Average Particle Diameter>>

From the viewpoint of forming a uniform and smooth resin layer, the average particle diameter of the inorganic pigment is preferably 5 µm or less, more preferably 3 µm or less, still more preferably 1 µm or less, and yet still more preferably 0.50 µm or less, and the lower limit thereof is not particularly limited, and is preferably 0.05 µm or more, and more preferably 0.10 µm or more. The average particle diameter of the inorganic pigment means a median diameter (d50) measured by laser diffraction scattering particle size distribution measurement.

From the above viewpoint, the inorganic pigment has an aspect ratio of preferably 1 to 50, more preferably 5 to 45, and an average particle diameter of preferably 0.05 to 5 µm, more preferably 0.05 to 3 µm, still more preferably 0.10 to 1 µm, and yet still more preferably 0.10 to 0.50 µm.

### (Binder)

The binder contained in the clay coat layer is not particularly limited, and examples thereof include a styrene-butadiene-based resin; a (meth)acrylic (co)polymer; a styrene-(meth)acrylic resin; an olefin-unsaturated carboxylic acid-based copolymer such as an ethylene-acrylic acid copolymer and an ethylene-methacrylic acid copolymer; and a biodegradable resin such as polylactic acid. These may be used alone, or two or more kinds thereof may be used in combination. Among these, one or more kinds selected from the group consisting of a styrene-butadiene-based resin, a styrene-(meth)acrylic resin, an olefin-unsaturated carboxylic acid-based copolymer, and polylactic acid are preferable, one or more kinds selected from the group consisting of a styrene-(meth)acrylic resin, an ethylene-(meth)acrylic acid copolymer, and polylactic acid are more preferable, and one or more kinds selected from the group consisting of a styrene-acrylic resin, an ethylene-acrylic resin, and polylactic acid are still more preferable.

The (meth)acrylic (co)polymer is a (co)polymer of one or more monomers selected from (meth)acrylic acid and a (meth)acrylic acid ester. The (meth)acrylic acid ester is not particularly limited, and is preferably an alkyl ester having 1 to 12 carbon atoms of (meth)acrylic acid.

The styrene-(meth)acrylic resin is a copolymer of styrene and one or more monomers selected from (meth)acrylic acid and a (meth)acrylic acid ester, preferably a styrene-acrylic resin or a styrene-methacrylic resin, and more preferably a styrene-acrylic acid copolymer or a styrene-acrylic acid ester copolymer.

The content of the binder in the clay coat layer is preferably 2% by mass or more, more preferably 10% by mass or more, and still more preferably 20% by mass or more, and is preferably 50% by mass or less, more preferably 40% by mass or less, and still more preferably 35% by mass or less. That is, the content of the binder in the clay coat layer is preferably 2 to 50% by mass, more preferably 10 to 40% by mass, and still more preferably 20 to 35% by mass.

From the above-described viewpoint, in the clay coat layer, the content of the inorganic pigment is preferably 50 to 98% by mass, more preferably 60 to 90% by mass, and still more preferably 65 to 80% by mass, and the content of the binder is preferably 2 to 50% by mass, more preferably 10 to 40% by mass, and still more preferably 20 to 35% by mass.

### (Optional Component)

Examples of the optional component that can be contained in the clay coat layer include an adhesive, a dispersant, a thickener, a water retention agent, an anti-foaming agent, a water resistant agent, a colorant, and a surfactant. Examples of the adhesive include a protein such as casein, soy protein, and synthetic protein; a starch such as an etherified starch including oxidized starch, positive starch, urea phosphate esterified starch, and hydroxyethyl etherified starch, and dextrin; and a cellulose derivative such as carboxymethyl cellulose, hydroxyethyl cellulose, and hydroxymethyl cellulose.

The coating amount of the clay coat layer is not particularly limited, and is preferably 5 g/m² or more, more preferably 8 g/m² or more, and still more preferably 10 g/m² or more, and is preferably 30 g/m² or less, more preferably 20 g/m² or less, and still more preferably 15 g/m² or less in terms of the solid content. That is, the coating amount of the clay coat layer is preferably 5 to 30 g/m², more preferably 8 to 20 g/m², and still more preferably 10 to 15 g/m² in terms of the solid content.

A method for forming the clay coat layer is not particularly limited, and is preferably a method in which a dispersion liquid containing an inorganic pigment and a binder is applied onto a paper substrate and dried to form the clay coat layer. As the dispersion liquid containing the inorganic pigment and the binder, a dispersion liquid using an aqueous medium containing water as a main component as a solvent is preferable.

### <Pigment Coating Layer>

The base paper for vapor deposition paper according to the present embodiment has a pigment coating layer on the other surface of the paper substrate, that is, on the surface opposite to the surface having the resin layer. It is considered that by providing the pigment coating layer and further applying a calender treatment under predetermined conditions, the smoothness of the surface can be enhanced and the coefficient of kinetic friction against stainless steel can be reduced, and as a result, vapor deposition paper excellent in printability and processing suitability can be obtained. The pigment coating layer is preferably mainly composed of a pigment and a binder. The expression "the pigment coating layer is mainly composed of an inorganic pigment and a binder" means that a total content of the pigment and the binder in the pigment coating layer is, for example, 50% by mass or more, preferably 60% by mass or more, more preferably 70% by mass or more, still more preferably 80% by mass or more, yet still more preferably 90% by mass or more, and particularly preferably 95% by mass or more. The upper limit thereof is not particularly limited, and is 100% by mass. The pigment coating layer may further contain an optional component in addition to the pigment and the binder.

### (Pigment)

The pigment contained in the pigment coating layer is not particularly limited, and examples thereof include inorganic pigments such as kaolin, clay, engineered kaolin, delaminated clay, calcined clay, heavy calcium carbonate, light calcium carbonate, talc, titanium dioxide, barium sulfate, calcium sulfate, zinc oxide, silicic acid, silicates, colloidal silica, and satin white; and organic pigments such as solid type, hollow type, or core-shell type. These may be used alone, or two or more kinds thereof may be used in combination. Among these, at least one selected from the group consisting of kaolin and calcium carbonate is preferable, it is more preferable to use kaolin and calcium carbonate in combination, and it is still more preferable to use kaolin, heavy calcium carbonate, and light calcium carbonate in combination. From the viewpoint of further improving the printability, the mass ratio of kaolin to calcium carbonate (kaolin/calcium carbonate) in the pigment is preferably 10/90 to 50/50, and more preferably 20/80 to 40/60.

The content of the pigment in the pigment coating layer is 50% by mass or more, and preferably 60% by mass or more, and 85% by mass or less, and preferably 83% by mass or less, from the viewpoint that when vapor deposition paper is formed and printing is performed on the vapor deposition paper, the ink is less likely to peel off, and the printability is excellent. That is, the content of the pigment in the pigment coating layer is 50 to 85% by mass, and preferably 60 to 83% by mass.

### (Binder)

The binder contained in the pigment coating layer is not particularly limited, and examples thereof include a styrene-butadiene-based resin; an acrylic resin such as a methyl (meth)acrylate copolymer and a styrene-(meth)acrylic copolymer; an olefin-unsaturated carboxylic acid-based copolymer such as an ethylene-(meth)acrylic acid copolymer; a natural polysaccharide such as dextrin, mannan, chitosan, arabinogalactan, glycogen, inulin, pectin, hyaluronic acid, hydroxyethylated starch, oxidized starch, etherified starch, phosphate-esterified starch, enzyme-modified starch, and a modified starch obtained by flash drying these starches, an oligomer thereof, and a modified product thereof. Among these, one or more selected from the group consisting of an acrylic resin, a styrene-butadiene-based resin, and modified starch are preferable, one or more selected from the group consisting of a styrene-(meth)acrylic copolymer, a styrene-butadiene-based resin, and oxidized starch are more preferable, one or more selected from the group consisting of a styrene-butadiene-based resin and oxidized starch are still more preferable, and a styrene-butadiene-based resin and oxidized starch are yet still more preferably used in combination.

The content of the binder in the pigment coating layer is preferably 1% by mass or more, more preferably 2% by mass or more, still more preferably 5% by mass or more, yet still more preferably 10% by mass or more, and even yet still more preferably 15% by mass or more, and is also preferably 50% by mass or less and more preferably 45% by mass or less. When the oxidized starch is used as the binder, the content of the oxidized starch in the pigment coating layer is preferably 1% by mass or more and more preferably 2% by mass or more, and is also preferably 12% by mass or less and more preferably 8% by mass or less. That is, the content of the binder in the pigment coating layer is preferably 1 to 50% by mass, more preferably 2 to 50% by mass, still more preferably 5 to 50% by mass, yet still more preferably 10 to 45% by mass, and even yet still more preferably 15 to 45% by mass, and when oxidized starch is used as the binder, the content is preferably 1 to 12% by mass, and more preferably 2 to 8% by mass.

### (Optional Component)

Examples of the optional component that can be contained in the pigment coating layer include an adhesive, a dispersant, a thickener, a water retention agent, an anti-foaming agent, a water resistant agent, a colorant, a surfactant, and a lubricant. Examples of the adhesive include a protein such as casein, soy protein, and synthetic protein; a starch such as an etherified starch including oxidized starch, positive starch, urea phosphate esterified starch, and hydroxyethyl etherified starch, and dextrin; and a cellulose derivative such as carboxymethyl cellulose, hydroxyethyl cellulose, and hydroxymethyl cellulose.

Examples of the lubricant include a hydrocarbon-based lubricant such as paraffin wax and synthetic polyethylene, a fatty acid such as stearic acid and stearyl alcohol, a higher alcohol-based lubricant, a fatty acid-amide-based lubricant such as stearic acid amide and oleic acid amide, a metal soap-based lubricant such as calcium stearate and zinc, an ester-based lubricant such as glycerin monostearate and glycerin monooleate, and a lubricant made of a mixture thereof. The content of the lubricant in the pigment coating layer is preferably 0.1 to 10% by mass. When the pigment coating layer contains a lubricant, sticking to a calender and blocking during winding can be prevented.

The coating amount of the pigment coating layer is not particularly limited, and is preferably 3 g/m² or more, more preferably 5 g/m² or more, and still more preferably 7 g/m² or more, and is preferably 30 g/m² or less, more preferably 20 g/m² or less, and still more preferably 15 g/m² or less in terms of the solid content. That is, the coating amount of the pigment coating layer is preferably 3 to 30 g/m², more preferably 5 to 20 g/m², and still more preferably 7 to 15 g/m² in terms of the solid content.

A method for forming the pigment coating layer is not particularly limited, and is preferably a method in which a dispersion liquid containing a pigment and a binder is applied onto a paper substrate and dried to form the pigment coating layer. As the dispersion liquid containing the pigment and the binder, a dispersion liquid using an aqueous medium containing water as a main component as a solvent is preferable.

From the above-described viewpoint, the coating amount of the resin layer is preferably 0.1 to 10 g/m², more preferably 0.5 to 5 g/m², and still more preferably 0.7 to 3 g/m² in terms of the solid content, the coating amount of the clay coat layer is preferably 5 to 30 g/m², more preferably 8 to 20 g/m², and still more preferably 10 to 15 g/m² in terms of the solid content, and the coating amount of the pigment coating layer is preferably 3 to 30 g/m², more preferably 5 to 20 g/m², and still more preferably 7 to 15 g/m² in terms of the solid content.

### <Physical Properties of Base Paper for Vapor Deposition Paper>

### (Oken Type Smoothness)

From the viewpoint of obtaining vapor deposition paper having excellent printability, the Oken type smoothness of the surface having a pigment coating layer of the base paper for vapor deposition paper is 300 seconds or more, preferably 350 seconds or more, more preferably 450 seconds or more, still more preferably 650 seconds or more, and yet still more preferably 850 seconds or more, and the upper limit thereof is not particularly limited, and is preferably 5000 seconds or less, and more preferably 3000 seconds or less. That is, the Oken type smoothness of the surface having the pigment coating layer of the base paper for vapor deposition paper is preferably 350 to 5000 seconds, more preferably 450 to 5000 seconds, still more preferably 650 to 3000 seconds, and yet still more preferably 850 to 3000 seconds. The Oken type smoothness of the surface having the pigment coating layer of the base paper for vapor deposition paper does not change even through a step of providing a vapor deposition layer in order to obtain vapor deposition paper, and therefore, when the Oken type smoothness is within the above range, vapor deposition paper excellent in printability is obtained. The Oken type smoothness of the surface having the pigment coating layer is measured in accordance with JIS P 8155:2010.

The Oken type smoothness of the surface having the pigment coating layer can be adjusted to the above range by adjusting the Oken type smoothness of the paper substrate to be used, or by performing a calender treatment under the following conditions after the pigment coating layer is formed.

As the calender treatment conditions, the linear pressure is preferably 10 kg/cm or more, more preferably 30 kg/cm or more, and still more preferably 50 kg/cm or more, and is preferably 1000 kg/cm or less, more preferably 500 kg/cm or less, and still more preferably 200 kg/cm or less. That is, the linear pressure is preferably 10 to 1000 kg/cm, more preferably 30 to 500 kg/cm, and still more preferably 50 to 200 kg/cm.

In addition, in a case where heating is performed in the calender treatment, the heating temperature is not particularly limited, and is preferably 20°C or higher, more preferably 30°C or higher, and still more preferably 35°C or higher, and is preferably 80°C or lower, more preferably 70°C or lower, and still more preferably 60°C or lower, from the viewpoint of preventing deterioration of the paper substrate or the pigment coating layer due to heat or sticking of the pigment coating layer while enhancing the effect of the treatment. That is, the heating temperature is preferably 20 to 80°C, more preferably 30 to 70°C, and still more preferably 35 to 60°C.

The calender treatment may be performed in either one stage or multiple stages, and from the viewpoint of further improving the printability and/or the automatic packaging suitability, the calender treatment is preferably performed in multiple stages (two or more stages), more preferably five or more stages, and still more preferably ten or more stages, and the upper limit is not particularly limited, and is preferably 15 or less stages. That is, the number of stages is preferably 2 to 15, more preferably 5 to 15, and still more preferably 10 to 15.

### (Coefficient of Kinetic Friction Against Stainless Steel)

The coefficient of kinetic friction of the surface of the base paper for vapor deposition paper having the pigment coating layer against stainless steel is 0.35 or less, and preferably 0.32 or less, from the viewpoint of obtaining vapor deposition paper excellent in processing suitability, and is more preferably 0.22 or less, still more preferably 0.20 or less, from the viewpoint of further improving the processing suitability (transportability in an automatic packaging machine), and the lower limit thereof is not particularly limited, and is preferably 0.10 or more. That is, the coefficient of kinetic friction of the surface of the base paper for vapor deposition paper having the pigment coating layer against stainless steel is preferably 0.10 to 0.32, more preferably 0.10 to 0.22, and still more preferably 0.10 to 0.20. In addition, since the coefficient of kinetic friction of the surface of the base paper for vapor deposition paper having the pigment coating layer against stainless steel does not change even after the step of providing the vapor deposition layer and the like, the processing suitability is excellent when the coefficient of kinetic friction is within the above range. The coefficient of kinetic friction of the surface having the pigment coating layer against stainless steel is measured in accordance with JIS P 8147:2010, and is specifically measured by a method described in Examples.

The coefficient of kinetic friction of the surface having the pigment coating layer against stainless steel can be adjusted within the above range by adjusting the Oken type smoothness of the paper substrate to be used, or by performing a calender treatment under the above conditions after the pigment coating layer is formed.

### (Thickness)

The thickness of the base paper for vapor deposition paper is preferably 10 µm or more, more preferably 30 µm or more, and still more preferably 50 µm or more, and is preferably 100 µm or less, and more preferably 80 µm or less. That is, the thickness of the base paper for vapor deposition paper is preferably 10 to 100 µm, more preferably 30 to 100 µm, and still more preferably 50 to 80 µm. The thickness of the base paper for vapor deposition paper is measured in accordance with JIS P 8118:2014.

The method for producing the base paper for vapor deposition paper according to the present embodiment is not limited, and it is preferable that the base paper for vapor deposition paper is formed by, for example, applying and drying a clay coat layer coating liquid containing an inorganic pigment and a binder as necessary on one surface of a paper substrate, then applying and drying a resin layer coating liquid containing a water-suspendable polymer, and applying and drying a pigment coating layer coating liquid containing a pigment and a binder on the other surface of the paper substrate, and further performing a calender treatment under the above conditions. In addition, as long as the base paper for vapor deposition paper according to the present embodiment can be obtained, after the pigment coating layer is formed on one surface of the paper substrate, a clay coat layer may be provided on the other surface of the paper substrate as necessary, and a resin layer may be provided. Each layer can be formed by coating as described above.

### [Vapor Deposition Paper]

The vapor deposition paper according to the present embodiment is vapor deposition paper having a vapor deposition layer on a resin layer of base paper for the vapor deposition paper having the resin layer on one surface of a paper substrate and a pigment coating layer on the other surface of the paper substrate, in which a content of a pigment in the pigment coating layer is 50% by mass or more and 85% by mass or less, and the surface having the pigment coating layer has an Oken type smoothness of 300 seconds or more and a coefficient of kinetic friction against stainless steel of 0.35 or less. The vapor deposition paper according to the present embodiment is excellent in printability and processing suitability in automatic packaging. Although the reason is not clear, it is considered that, according to the vapor deposition paper of the present embodiment, a pigment coating layer is provided on the other surface of the paper substrate, the smoothness of the surface is increased so that the Oken type smoothness becomes a predetermined value or more, and the coefficient of kinetic friction with respect to stainless steel is reduced so that the coefficient of kinetic friction against stainless steel becomes a predetermined value or less, thereby obtaining vapor deposition paper excellent in printability and processing suitability in automatic packaging. The effects of the present invention are not limited by the above mechanism. In addition, the Oken type smoothness and the coefficient of kinetic friction against stainless steel of the surface of the vapor deposition paper having the pigment coating layer do not change even if the vapor deposition layer or the like is provided on the resin layer of the base paper for vapor deposition paper. The preferable ranges of the Oken type smoothness and the coefficient of kinetic friction against stainless steel of the surface of the vapor deposition paper having the pigment coating layer are the same as those of the surface of the base paper for vapor deposition paper having the pigment coating layer described above.

As the paper substrate used in the vapor deposition paper according to the present embodiment, those exemplified as the paper substrate used in the above-described base paper for vapor deposition paper can be used. The resin layer provided on one surface of the paper substrate may also be one exemplified as the resin layer of the base paper for vapor deposition paper described above. The pigment coating layer provided on the other surface of the paper substrate may also be one exemplified as the pigment coating layer of the base paper for vapor deposition paper described above.

### <Vapor Deposition Layer>

The vapor deposition paper according to the present embodiment has a vapor deposition layer on the resin layer of the base paper for vapor deposition paper. The vapor deposition layer is at least one of a layer made of a metal and a layer made of ceramic. That is, the vapor deposition layer may be any of a layer made of a metal, a layer made of ceramic, and a laminate of a metal layer and a ceramic layer. When the vapor deposition layer is a laminate of a metal layer and a ceramic layer, the metal layer may be on a resin layer side of the base paper for vapor deposition paper, or the ceramic layer may be on the resin layer side of the base paper for vapor deposition paper, with no particular limitations.

The vapor deposition layer may be any of a layer made of a metal, a layer made of ceramic, and a laminate thereof, and is preferably a layer made of a metal. When the vapor deposition layer is a layer made of a metal, specific examples of the metal include aluminum and titanium. When the vapor deposition layer is a layer made of ceramic, specific examples of the ceramic include silicon oxide, titanium oxide, aluminum oxide, and diamond-like carbon. These may be used alone or may be used in combination with two or more kinds thereof.

Among these, the vapor deposition layer is preferably a layer made of one or more selected from the group consisting of aluminum, aluminum oxide, silicon oxide, and diamond-like carbon, more preferably a layer made of one or more selected from the group consisting of aluminum, aluminum oxide, and diamond-like carbon from the viewpoint of ease of production, and still more preferably a layer made of one or more selected from the group consisting of aluminum and aluminum oxide.

### (Thickness)

The thickness of the vapor deposition layer is preferably 1 nm or more, more preferably 2 nm or more, and still more preferably 3 nm or more, and is preferably 1000 nm or less, more preferably 500 nm or less, and still more preferably 100 nm or less. In addition, the thickness of the vapor deposition layer is preferably 10 nm or more, and more preferably 15 nm or more, and is preferably 80 nm or less, and more preferably 70 nm or less, from the viewpoint of barrier property. Further, the thickness of the vapor deposition layer is preferably 4 nm or more, and more preferably 5 nm or more, and is preferably 100 nm or less, more preferably 70 nm, and still more preferably 60 nm or less, from the viewpoint of adhesiveness to other layers and cost. That is, the thickness of the vapor deposition layer is preferably 1 to 1000 nm, more preferably 2 to 500 nm, still more preferably 3 to 100 nm, yet still more preferably 4 to 80 nm, even yet still more preferably 5 to 70 nm, and further still more preferably 10 to.60 nm.

### <Heat Seal Layer>

The vapor deposition paper according to the present embodiment preferably has a heat seal layer on the vapor deposition layer. The heat seal layer is a layer that is melted and bonded by heating, ultrasonic waves, or the like. Examples of the method for forming the heat seal layer include a method in which a thermoplastic resin solution or a thermoplastic resin dispersion liquid is applied and dried to obtain a heat seal layer, and a method in which extrusion lamination is performed. Among these, a method in which a thermoplastic resin solution or a thermoplastic resin dispersion liquid is applied and dried to obtain a heat seal layer is preferable. Examples of the thermoplastic resin solution or the thermoplastic resin dispersion liquid used herein include a solution using an organic solvent that dissolves a thermoplastic resin, a dispersion liquid using an organic solvent that disperses a thermoplastic resin, and a dispersion liquid using an aqueous medium, and a dispersion liquid using an aqueous medium is preferable from the viewpoint of coatability and an environmental load.

### (Thermoplastic Resin)

The thermoplastic resin suitable for the dispersion liquid using an aqueous medium may be any of a natural resin and a synthetic resin, and examples thereof include a starch derivative, casein, shellac, a polyvinyl alcohol and a derivative thereof, an acrylic resin, an ionomer-based resin, a maleic acid-based resin, a urethane-based resin, a polyester-based resin, a styrene-butadiene-based resin, a vinyl chloride-based resin, and a polyolefin-based resin.

More specifically, examples of the acrylic resin include an acrylic resin obtained by copolymerizing, as a monomer component, (meth)acrylic acid and an alkyl ester thereof or styrene, a styrene-maleic acid resin, a styrene-acrylic acid-maleic acid resin, a water-soluble polyurethane resin, and a water-soluble polyester resin.

Preferred examples of the ionomer-based resin include an ethylene-acrylic acid copolymer ionomer and an ethylene-methacrylic acid ionomer. Here, an ionomer is a polymer neutralized with a cation, and examples of the cation include a metal ion, an ammonium ion (NH₄⁺), and an organic ammonium ion. Examples of the metal ion include an alkali metal ion such as a lithium ion (Li⁺), a sodium ion (Na⁺), and a potassium ion (K⁺), an alkaline earth metal ion such as a magnesium ion (Mg²⁺) and a calcium ion (Ca²⁺), and a transition metal ion such as a zinc ion (Zn²⁺) and a copper ion (Cu²⁺). Among them, a sodium ion is preferable as the metal ion from the viewpoint of availability and the like.

Among these, from the viewpoint of the stability of the coating liquid and the viewpoint of the solvent resistance of the coating layer, the thermoplastic resin is preferably one or more selected from the group consisting of a starch derivative, casein, shellac, a polyvinyl alcohol and a derivative thereof, an ionomer-based resin, an acrylic resin, a polyolefin-based resin, and a maleic acid-based resin, more preferably one or more selected from the group consisting of a starch derivative, a polyvinyl alcohol, a polyvinyl alcohol derivative, an ionomer-based resin, an acrylic resin, a polyolefin-based resin, and a maleic acid-based resin, still more preferably at least one selected from the group consisting of a starch derivative, a polyvinyl alcohol, a polyvinyl alcohol derivative, an ionomer-based resin, an acrylic resin, and a polyolefin-based resin, yet still more preferably one or more selected from the group consisting of a polyvinyl alcohol, a polyvinyl alcohol derivative, an ionomer-based resin, and a polyolefin-based resin, and even yet still more preferably one or more selected from the group consisting of an ionomer-based resin and a polyolefin-based resin.

Examples of the method for applying the thermoplastic resin solution or the thermoplastic resin dispersion liquid include a bar coating method, a blade coating method, a squeeze coating method, an air knife coating method, a roll coating method, a gravure coating method, and a transfer coating method, and a coating machine such as a fountain coater or a slit die coater may be used.

The coating amount of the heat seal layer is not particularly limited, and is preferably 0.5 g/m² or more, more preferably 1 g/m² or more, and still more preferably 1.5 g/m² or more from the viewpoint of securing sufficient heat sealing property, and is preferably 15 g/m² or less, more preferably 10 g/m² or less, still more preferably 7 g/m² or less, and yet still more preferably 5 g/m² or less from the viewpoint of the recyclability of the vapor deposition paper. That is, the coating amount of the heat seal layer is preferably 0.5 to 15 g/m², more preferably 1 to 10 g/m², still more preferably 1.5 to 7 g/m², and yet still more preferably 1.5 to 5 g/m².

### <Overcoat Layer>

The vapor deposition paper according to the present embodiment may have an overcoat layer between the vapor deposition layer and the heat seal layer. The overcoat layer is a layer for protecting the vapor deposition layer. The vapor deposition paper according to the present embodiment has a certain level of barrier properties by having a vapor deposition layer, and the oxygen barrier property can be further improved by having an overcoat layer on the vapor deposition layer. In addition, the vapor deposition layer is less likely to be damaged by processing such as bending, and even when the vapor deposition layer is damaged, the oxygen barrier property can be secured by the overcoat layer, and an excellent oxygen barrier property can be maintained.

The overcoat layer is not particularly limited, and may contain an organic compound, an inorganic compound, or both of them. That is, the overcoat layer may be any one of an organic layer, an inorganic layer, and an organic-inorganic hybrid layer. Examples of the organic compound include a vinyl alcohol-based resin such as a polyvinyl alcohol, a polyurethane-based resin, a (meth)acryloyl compound, and a reaction product of the (meth)acryloyl compound. Examples of the inorganic compound include an oxide of silicon, aluminum, or the like.

Among these, the overcoat layer is preferably one exemplified as the resin contained in the resin layer of the base paper for vapor deposition paper, more preferably contains at least one selected from the group consisting of a water-suspendable polyurethane-based resin and a water-suspendable polyester-based resin, still more preferably can be prepared into one or more selected from the group consisting of a polyurethane-based resin dispersion and a polyurethane-based resin emulsion, yet still more preferably can be prepared into a polyurethane-based resin dispersion or a polyurethane-based resin emulsion, and even yet still more preferably can be prepared into a polyurethane-based resin dispersion.

The water-suspendable polyurethane-based resin or the water-suspendable polyester-based resin that can be contained in the overcoat layer may be the same type or a different type of resin as the above-described resin to be contained in the resin layer of the base paper for vapor deposition paper, and is preferably the same type. As the resin layer of the base paper for vapor deposition paper, a synthetic product or a commercially available product exemplified as usable ones may be used.

The content of the water-suspendable polyurethane-based resin or the water-suspendable polyester-based resin in the overcoat layer is preferably 80% by mass or more, more preferably 90% by mass or more, still more preferably 95% by mass or more, and yet still more preferably 99% by mass or more, and the upper limit thereof is not particularly limited, and is 100% by mass.

The overcoat layer may contain other resins and additives as long as the effects of the present invention are not impaired. Examples of the additive include a surfactant, a pigment, an antioxidant, an antistatic agent, a dye, a plasticizer, a lubricant, and a release agent. When the polyurethane-based resin is used as an aqueous dispersion liquid, a dispersant is preferably used in order to disperse the polyurethane-based resin in an aqueous medium to obtain a uniform overcoat layer film.

The coating amount of the overcoat layer is preferably 0.1 g/m² or more, more preferably 0.2 g/m² or more, and still more preferably 0.3 g/m² or more in terms of the solid content, from the viewpoint of the protection of the vapor deposition layer, and is preferably 10 g/m² or less, more preferably 7 g/m² or less, and still more preferably 5 g/m² or less in terms of the solid content, from the viewpoint of the recyclability of the vapor deposition paper. That is, the coating amount of the overcoat layer is preferably 0.1 to 10 g/m², more preferably 0.2 to 7 g/m², and still more preferably 0.3 to 5 g/m².

The thickness of the overcoat layer is preferably 0.1 µm or more, more preferably 0.2 µm or more, and still more preferably 0.3 µm or more from the viewpoint of the protection of the vapor deposition layer, and is preferably 10 µm or less, more preferably 7 µm or less, and still more preferably 4 µm or less from the viewpoint of the recyclability of the vapor deposition paper. That is, the thickness of the overcoat layer is preferably 0.1 to 10 µm, more preferably 0.2 to 7 µm, and still more preferably 0.3 to 4 µm.

The method for forming the overcoat layer is not particularly limited, and it is preferable that the overcoat layer is formed by applying and drying an aqueous medium of an organic compound or an inorganic compound constituting the overcoat layer.

In the vapor deposition paper according to the present embodiment, the overcoat layer may be an outermost layer. Even when the overcoat layer is the outermost layer, the design of the vapor deposition layer having a glossiness is not impaired.

### [Method for Producing Vapor Deposition Paper]

A method for producing the vapor deposition paper according to the present embodiment is not limited, and preferably includes a step of forming a vapor deposition layer by vapor-depositing at least one of a metal and ceramic on a surface provided with a resin layer of base paper for vapor deposition paper having a clay coat layer and a resin layer in this order as necessary on one surface of a paper substrate, and a step of forming a heat seal layer by applying and drying a heat seal layer coating liquid on the vapor deposition layer. In this case, an overcoat layer may be formed on the vapor deposition layer by coating before the heat seal layer is formed.

As a method of vapor-depositing a metal or ceramic, a method of vacuum-depositing a metal or ceramic directly on the surface of the resin layer of the base paper for vapor deposition paper is preferable.

The overcoat layer is preferably formed directly on the vapor deposition layer from the viewpoint of efficiently protecting the vapor deposition layer and enhancing the barrier property. As a method for forming the overcoat layer, it is preferable to obtain the overcoat layer by applying and drying an overcoat layer coating liquid. By using the method for forming the overcoat layer by applying an overcoat layer coating liquid, an overcoat layer having a relatively small thickness of 10 µm or less can be formed.

Examples of the overcoat layer coating liquid used herein include an aqueous medium of an organic compound or an inorganic compound constituting the overcoat layer. Among these, a solution using an organic solvent that dissolves a polyurethane-based resin, a dispersion liquid using an organic solvent that disperses a polyurethane-based resin, and a dispersion liquid using an aqueous medium are preferable, and a dispersion liquid using an aqueous medium is more preferable from the viewpoint of coatability and an environmental load.

Examples of the method for applying an overcoat layer coating liquid include a bar coating method, a blade coating method, a squeeze coating method, an air knife coating method, a roll coating method, a gravure coating method, and a transfer coating method, and a coating machine such as a fountain coater or a slit die coater may be used. The coated vapor deposition paper coated with the overcoat layer coating liquid is dried to remove the organic solvent or the aqueous medium, thereby obtaining vapor deposition paper having an overcoat layer on the vapor deposition layer.

A heat seal layer containing a thermoplastic resin can be formed on the vapor deposition layer or the overcoat layer. Examples of the method for forming the heat seal layer include a method in which a thermoplastic resin solution or a thermoplastic resin dispersion liquid is applied and dried to obtain a heat seal layer, and a method in which extrusion lamination is performed. Among these, a method in which a thermoplastic resin solution or a thermoplastic resin dispersion liquid is applied and dried to obtain a heat seal layer is preferable.

Examples of the thermoplastic resin solution or the thermoplastic resin dispersion liquid used herein include a solution using an organic solvent that dissolves a thermoplastic resin, a dispersion liquid using an organic solvent that disperses a thermoplastic resin, and a dispersion liquid using an aqueous medium, and a dispersion liquid using an aqueous medium is preferable from the viewpoint of coatability and an environmental load.

Examples of the method for applying the thermoplastic resin solution or the thermoplastic resin dispersion liquid include a bar coating method, a blade coating method, a squeeze coating method, an air knife coating method, a roll coating method, a gravure coating method, and a transfer coating method, and a coating machine such as a fountain coater or a slit die coater may be used.

The coated vapor deposition paper coated with the thermoplastic resin solution or the thermoplastic resin dispersion liquid is dried to remove the organic solvent or the aqueous medium, whereby a vapor deposition paper having a heat seal layer on the vapor deposition layer or the overcoat layer can be obtained.

From the above-described viewpoint, in the vapor deposition paper, the thickness of the base paper for vapor deposition paper is preferably 10 to 100 µm, more preferably 30 to 100 µm, and still more preferably 50 to 80 µm, the thickness of the vapor deposition layer is preferably 1 to 1000 nm, more preferably 2 to 500 nm, still more preferably 3 to 100 nm, yet still more preferably 4 to 100 nm, even yet still more preferably 5 to 70 nm, and further still more preferably 10 to 60 nm, the thickness of the overcoat layer is preferably 0.1 to 10 µm, more preferably 0.2 to 7 µm, and still more preferably 0.3 to 4 µm, the coating amount of the overcoat layer is preferably 0.1 to 10 g/m², more preferably 0.2 to 7 g/m², and still more preferably 0.3 to 5 g/m², and the coating amount of the heat seal layer is preferably 0.5 to 15 g/m², more preferably 1 to 10 g/m², still more preferably 1.5 to 7 g/m², and yet still more preferably 1.5 to 5 g/m².

### <Physical Properties of Vapor Deposition Paper>

### (Thickness)

The thickness of the vapor deposition paper is preferably 20 µm or more, and more preferably 50 µm or more, and is preferably 200 µm or less, and more preferably 150 µm or less. That is, the thickness of the vapor deposition paper is preferably 20 to 200 µm, and more preferably 50 to 150 µm. The thickness of the vapor deposition paper is measured in accordance with JIS P 8118:2014.

### (Oxygen Permeability)

The oxygen permeability of the vapor deposition paper at 23°C and 50% RH is preferably 1.5 mL/(m²·day·atm) or less and more preferably 1.0 mL/(m²·day·atm) or less, and the lower limit thereof is 0 mL/(m²·day·atm). The oxygen permeability of the vapor deposition paper is measured in accordance with JIS K 7126-2:2006, and is specifically measured by the method described in Examples.

### (Water Vapor Permeability)

The water vapor permeability of the vapor deposition paper at 40°C and 90% RH is preferably 1.0 g/(m²·day) or less and more preferably 0.7 g/(m²·day) or less, and the lower limit thereof is 0 g/(m²·day). The water vapor permeability of the vapor deposition paper is measured in accordance with JIS K 7129-2:2019, and is specifically measured by the method described in Examples.

The vapor deposition paper according to the present embodiment can be suitably used as a packaging material, particularly a packaging bag, for foods such as coffee, confectionery, and milk, pharmaceutical products, medical products, electronic components, and the like, by taking advantage of the above-described excellent printability and processing suitability, and further, gas barrier property.

### [Packaging Bag]

The packaging bag according to another embodiment of the present disclosure is a packaging bag formed using the vapor deposition paper. Examples of the packaging bag include forms such as a standing pouch type, a side surface seal type, a two side seal type, a three side seal type, a four side seal type, an envelope seal type, a butt-seam seal type (pillow seal type), a pleated seal type, a flat bottom seal type, a square bottom seal type, and a gusset type.

The packaging bag of the present embodiment may be a packaging bag in which the heat seal layers are opposed to each other by bending the vapor deposition paper having the heat seal layer or stacking two sheets thereof and the peripheral end portions thereof are heat-sealed so as to obtain the above-described form, or may be a packaging bag in which the vapor deposition paper is bent or stacked two sheets and the peripheral end portions thereof are bonded by an adhesive so as to obtain the above-described form.

The vapor deposition paper of the present embodiment may be used for applications other than the packaging bag, and may be used for, for example, a soft packaging material such as a lid and a label; a liquid container such as a milk carton (hereinafter, also referred to as a liquid paper container); a packaging container such as a cup, a tray, a plate, a lid material, and a laminate tube. At this time, the content to be packaged may be a liquid, a solid (a granular material, a powdery material, or the like), or a gel body.

### EXAMPLES

Hereinafter, features of the present invention will be described more specifically with reference to Examples and Comparative Examples. A material, an amount to be used, a proportion, a treatment content, a treatment procedure, and the like described in the following Examples can be appropriately changed without departing from the gist of the present invention. Accordingly, the scope of the present invention should not be construed as being limited to the following specific examples. Unless otherwise specified, "%" and "part" represent "% by mass" and "part by mass", respectively. Unless otherwise specified, operations in Examples and Comparative Examples were performed under conditions of room temperature (20°C to 25°C) and normal humidity (40% RH to 50% RH).

### [Measurement and Evaluation]

The following analysis and evaluation were performed on the base papers for vapor deposition paper, the vapor deposition papers (packaging materials), and the packaging bags according to Examples and Comparative Examples.

### <Base Paper for Vapor Deposition Paper>

### (Oken Type Smoothness)

The Oken type smoothness of the surface having the pigment coating layer was measured in accordance with JIS P 8155:2010.

### (Coefficient of Kinetic Friction Against Stainless Steel)

The coefficient of kinetic friction of the surface having the pigment coating layer against stainless steel was measured in accordance with JIS P 8147:2010 by fixing a stainless steel plate on the sled side and placing a test piece on the table side so that the surface having the pigment coating layer was in contact with stainless steel.

### <Vapor Deposition Paper>

### (Oxygen Permeability)

The oxygen permeability of the vapor deposition paper was measured under the conditions of a temperature of 23°C and a relative humidity of 50% using an oxygen permeability measuring device (trade name "OX-TRAN 2/22" manufactured by MOCON Inc.). Specifically, an isocyanate-based adhesive (manufactured by DIC Corporation, 1 part by mass of DICDRY KW-75 was mixed with 10 parts by mass of DICDRY LX-500) was applied to the surface of the heat seal layer of the vapor deposition paper obtained in Examples and Comparative Examples at a coating amount of 5 g/m², and then a CPP film (manufactured by Hokuetsu Kasei Co., Ltd., GP-32) having a thickness of 20 µm was attached thereto to form a laminated sheet. The oxygen permeability of the laminated sheet was measured in accordance with JIS K 7126-2:2006 at a temperature of 23°C and a relative humidity of 50%. The lower the value of the oxygen permeability, the better the oxygen barrier property.

### (Water Vapor Permeability)

The water vapor permeability of the vapor deposition paper was measured in accordance with JIS Z 7129-2:2019 (temperature: 40°C ± 0.5°C, relative humidity: 90% ± 2%) by disposing the overcoat layer or the vapor deposition layer of the vapor deposition paper so as to be on the inner side (low humidity side). The lower the water vapor permeability, the better the water vapor barrier property.

### (Printability)

Four color test printing was performed using a gravure printer, and the print densities were evaluated using a GretagMacbeth portable reflective densitometer RD-19A.
A: The print densities of all the four colors were 1.0 or more.
B: The print densities of one or more colors were less than 1.0, but white spots were not noticeable.
C: The print densities of one or more colors were less than 1.0, and white spots were noticeable.

### (Processing Suitability)

### <<Cracking and Scraping of Pigment Coating Layer>>

By using a horizontal pillow packaging machine (trade name "α8 series FW3410" manufactured by FUJI MACHINERY CO., LTD.), empty bags having a 150 mm in width and a 250 mm in length were continuously produced at a rate of 60 bags/min without putting contents therein, and the state of the pigment coating layer of the obtained empty bag was evaluated according to the following criteria.
A: No cracking or scraping was observed.
B: Cracking or scraping was observed, but was hardly noticeable.
C: Cracking or scraping was observed and was noticeable.

### <<Transportability in Automatic Packaging Machine>>

Using a horizontal pillow packaging machine (trade name "α8 series FW3410" manufactured by FUJI MACHINERY CO., LTD.), empty bags having a 150 mm in width and a 250 mm in length were continuously produced at a rate of 60 bags/min without putting contents therein, and the transportability of the packaging material unwound from the roll before being formed into a packaging bag was evaluated according to the following criteria.
A: The packaging material is smoothly pulled and does not meander.
B: The packaging material is slightly caught but does not meander.
C: The packaging material is not continuously pulled or meander occurs.

### <Packaging Bag>

### (Appearance)

The appearance of the empty packaging bag produced in the evaluation of the processing suitability described above was evaluated according to the following criteria.
A: There is no distortion in the bag, and there is no sealing failure.
B: There is slight distortion in the bag, but there is no sealing failure.
C: The bag is greatly distorted, or a sealing failure occurs.

### (Gas barrier property)

The empty packaging bag produced in the evaluation of the processing suitability described above was measured under conditions of a temperature of 23°C and a relative humidity of 50% using an oxygen permeability measuring device (trade name "OX-TRAN 2/22" manufactured by MOCON Inc.), and evaluated according to the following criteria. Note that "pkg" means "package".
A: The oxygen permeability is less than 0.1 mL/(day·pkg·0.2 atm).
B: The oxygen permeability is 0.1 mL/(day·pkg·0.2 atm) or more and less than 1 mL/(day·pkg·0.2 atm).
C: The oxygen permeability is 1 mL/(day·pkg·0.2 atm) or more.

### Example 1

### <Production of Base Paper for Vapor Deposition Paper>

Seventy parts of kaolin (trade name "Contour Xtreme" manufactured by IMERYS S.A., aspect ratio: 33, average particle diameter d50: 0.26 µm) and 30 parts (solid content) of a styrene-acrylic copolymer aqueous dispersion liquid (trade name "ACRONAL S504" manufactured by BASF SE) were mixed to prepare a clay coat layer coating liquid. The above-described clay coat layer coating liquid was subjected to Mayer bar coating on a glossy surface of one-side machine glazed paper (hardwood material ratio of 100%, basis weight of 50 g/m², thickness of 60 µm, density of 0.83 g/cm³, Stockigt sizing degree (glossy surface) of 9 seconds, Oken type smoothness (glossy surface) of 430 seconds) and dried at 120°C for 1 minute to form a clay coat layer (12 g/m², thickness of 4.6 µm). Next, an aqueous dispersion liquid of a water-suspendable polyurethane-based resin binder having an oxygen permeability (23°C, 50% RH) of 2.0 mL/(m²·day·atm) in a thickness of 25 µm (trade name "TAKELAC WPB-341" manufactured by Mitsui Chemicals, Inc., glass transition temperature of 130°C, solid content concentration of 30%) was diluted with water so as to have a solid content concentration of 10%, and then subjected to Mayer bar coating and dried at 120°C for 1 minute to form a resin layer (1 g/m², thickness of 1 µm) on the clay coat layer.

Next, 30 parts of finely powdered kaolin (trade name "Miragloss J" manufactured by BASF SE), 40 parts of light calcium carbonate (trade name "TP-123CS" manufactured by Okutama Kogyo Co., Ltd), and 30 parts of heavy calcium carbonate (trade name "Hydrocurve 90" manufactured by Bihoku Funka Kogyo Co., Ltd.) as solid contents, respectively were added to an aqueous solution prepared by adding 0.1 parts of sodium polyacrylate (trade name "ARON T-50" manufactured by Toagosei Co., Ltd.) as a dispersing agent to 100 parts of kaolin to be dispersed, and dispersed by a Cowles dispersing machine to prepare a pigment slurry.

To this pigment slurry, 5 parts (solid content) of oxidized starch (trade name "OJI-ACE-A" manufactured by Oji Cornstarch Co., Ltd.) and 25 parts (solid content) of styrene-butadiene copolymer latex (trade name "OJ1000H" manufactured by JSR Corporation) as a binder were added to 70 parts (solid content) of pigment, thereby finally preparing a pigment coating layer coating liquid A having a solid content concentration of 60%. This was coated on the surface opposite to the resin layer using a Meyer bar so as to be 10 g/m² in terms of the solid content, then dried for 1 minute with an air-blow dryer at 120°C, finally brought into contact with a chilled roll on the resin layer-coated surface and a cotton roll on the pigment coating layer-coated surface at a linear pressure of 90 kg/cm, and subjected to a 12-stage super calender treatment by heating the rolls to 40°C to obtain base paper for vapor deposition paper (thickness: 65 µm, smoothness on the resin layer side: 7000 seconds, smoothness on the pigment coating layer side on the opposite surface: 2400 seconds, coefficient of kinetic friction against stainless steel on the pigment coating layer side: 0.188). The obtained base paper for vapor deposition paper was subjected to the above-described analysis and evaluation. The results are shown in Table 1.

### <Production of Vapor Deposition Paper>

An aluminum vapor deposition layer (thickness of 50 nm) was formed on the resin layer of the base paper for vapor deposition paper using a batch-type vacuum vapor deposition apparatus. Next, an aqueous dispersion liquid of ethylene-methacrylic acid copolymer sodium salt (active content: 35% by mass, trade name "CHEMIPEARL S-300" manufactured by Mitsui Chemicals, Inc.) was diluted with water so that the active content was 20% by mass to prepare a heat seal layer coating liquid, and the coating liquid was applied with a Meyer bar and dried at 120°C for 1 minute to form a heat seal layer (3 g/m²), thereby obtaining vapor deposition paper. The obtained vapor deposition paper was subjected to the above-described analysis and evaluation. The results are shown in Table 1.

### Example 2

Base paper for vapor deposition paper and vapor deposition paper were obtained in the same manner as in Example 1, except that the blending amount of the pigment coating layer coating liquid A of Example 1 was changed to 80 parts of the pigment, 5 parts of the oxidized starch, and 15 parts by mass of the styrene-butadiene copolymer latex as solid contents, respectively, and used as a pigment coating layer coating liquid B.

### Example 3

Base paper for vapor deposition paper and vapor deposition paper were obtained in the same manner as in Example 1, except that the blending amount of the pigment coating layer coating liquid A of Example 1 was changed to 60 parts of the pigment, 5 parts of the oxidized starch, and 35 parts by mass of the styrene-butadiene copolymer latex as solid contents, respectively, and used as a pigment coating layer coating liquid C.

### Example 4

Thirty parts of finely powdered kaolin (trade name "Miragloss J" manufactured by BASF), 40 parts of light calcium carbonate (trade name "TP-123CS" manufactured by Okutama Kogyo Co., Ltd), and 30 parts of heavy calcium carbonate (trade name "Hydrocurve 90" manufactured by Bihoku Funka Kogyo Co., Ltd.) as solid contents, respectively were added to an aqueous solution prepared by adding 0.1 parts of sodium polyacrylate (trade name "ARON T-50" manufactured by Toagosei Co., Ltd.) as a dispersing agent to 100 parts of kaolin to be dispersed, and dispersed by a Cowles dispersing machine to prepare a pigment slurry.

Base paper for vapor deposition paper and vapor deposition paper were obtained in the same manner as in Example 1, except that to this pigment slurry, 5 parts (solid content) of oxidized starch (trade name "OJI-ACE-A" manufactured by Oji Cornstarch Co., Ltd.) and 15 parts (solid content) of styrene-butadiene copolymer latex (trade name "OJ1000H" manufactured by JSR Corporation) as a binder were added to 80 parts (solid content) of pigment to finally prepare a pigment coating layer coating liquid D having a solid content concentration of 60%, and the coating amount of the clay coat layer was changed from 12 g/m² to 10 g/m² (thickness of 3.8 µm).

### Example 5

Base paper for vapor deposition paper and vapor deposition paper were obtained in the same manner as in Example 4, except that the vapor deposition source was a mixture of aluminum and oxygen instead of aluminum, which was vacuum-deposited, the vapor deposition layer was made of alumina (AlOx), and the thickness was set to 20 nm.

### Example 6

Base paper for vapor deposition paper and a vapor deposition paper were obtained in the same manner as in Example 4, except that the vapor deposition layer was made of silica (SiOx) by using an electron beam vapor deposition method instead of aluminum as the vapor deposition source, and the thickness was set to 20 nm.

### Example 7

Base paper for vapor deposition paper and vapor deposition paper were obtained in the same manner as in Example 4, except that chemical vapor deposition was performed using acetylene instead of aluminum as the vapor deposition source, the vapor deposition layer was made of diamond-like carbon (DLC), and the thickness was set to 20 nm.

### Example 8

Base paper for vapor deposition paper and vapor deposition paper were obtained in the same manner as in Example 4, except that the heat seal layer coating liquid was changed to a polyolefin dispersion (active content: 43% by mass, trade name "RHOBARR 320" manufactured by Dow Chemical Japan Co., Ltd.).

### Example 9

Base paper for vapor deposition paper and vapor deposition paper were obtained in the same manner as in Example 4, except that after aluminum vapor deposition, an aqueous dispersion liquid of a polyurethane-based resin binder having an oxygen permeability (23°C, 50% RH) of 2.0 mL/(m²·day·atm) in a thickness of 25 µm (trade name "TAKELAC WPB-341" manufactured by Mitsui Chemicals, Inc., glass transition temperature of 130°C, solid content concentration of 30%) was diluted with water so as to have a solid content concentration of 10%, and then coated by a Mayer bar and dried at 120°C for 1 minute to form an overcoat layer (0.5 g/m², thickness of 0.5 µm).

### Example 10

Base paper for vapor deposition paper and vapor deposition paper were obtained in the same manner as in Example 4, except that the number of stages of the super calender was changed from 12 to 6.

### Example 11

Base paper for vapor deposition paper and vapor deposition paper were obtained in the same manner as in Example 4, except that the number of stages of the super calender was changed from 12 to 2.

### Example 12

Base paper for vapor deposition paper and vapor deposition paper were obtained in the same manner as in Example 4, except that an aqueous dispersion liquid of a water-suspendable polyester-based resin (trade name "elitel KT-8803" manufactured by Unitika Ltd., acid value of 8 mgKOH/g, hydroxyl value of 3 mgKOH/g, glass transition temperature of 65°C, solid content concentration of 30%) was diluted with water so as to have a solid content concentration of 10%, and then subjected to Mayer bar coating and dried at 120°C for 1 minute to form a resin layer (1 g/m², thickness of 1 µm) on the clay coat layer.

### Example 13

Base paper for vapor deposition paper and vapor deposition paper were obtained in the same manner as in Example 4, except that a water-soluble polyvinyl alcohol-based resin (trade name "EXCEVAL HR-3010" manufactured by Kuraray Co., Ltd., ethylene-modified polyvinyl alcohol, saponification degree of 99.00 to 99.40 mol%) was dissolved in water, further diluted with water so as to have a solid content concentration of 8%, and then subjected to Mayer bar coating and dried at 120°C for 1 minute to form a resin layer (1 g/m², thickness of 1 µm) on the clay coat layer.

The results of Examples 1 to 13 are shown in Table 1 below.

### [Table 1]

**Table 1**

| | | | | Examples | | | | | | |
|---|---|---|---|---|---|---|---|---|---|---|
| | | | | 1 | 2 | 3 | 4 | 5 | 6 | 7 |
| Base paper for vapor deposition paper | Paper substrate | Type | - | One-side machine glazed paper | | | | | | |
| | Clay coat layer | Coating amount | g/m² | 12 | 12 | 12 | 10 | 10 | 10 | 10 |
| | Resin layer | Coating amount | g/m² | 1 | 1 | 1 | 1 | 1 | 1 | 1 |
| | Pigment coating layer | Type of coating liquid | - | A | B | C | D | D | D | D |
| | | Blending amount of pigment | Parts by mass | 70 | 80 | 60 | 80 | 80 | 80 | 80 |
| | | Blending amount of binder | Parts by mass | 30 | 20 | 40 | 20 | 20 | 20 | 20 |
| | | Coating amount | g/m² | 10 | 10 | 10 | 10 | 10 | 10 | 10 |
| | Super calender | Number of stages | Stage | 12 | 12 | 12 | 12 | 12 | 12 | 12 |
| Vapor deposition paper | Vapor deposition layer | Type | - | Al | Al | Al | Al | AlOx | SiOx | DLC |
| | Overcoat layer | Type of resin | - | - | - | - | - | - | - | - |
| | | Coating amount | g/m² | - | - | - | - | - | - | - |
| | Heat seal layer | Type of resin | - | Ethylene-methacrylic acid copolymer | | | | | | |
| | | Coating amount | g/m² | 3 | 3 | 3 | 3 | 3 | 3 | 3 |
| Physical properties | Surface having a pigment coating layer | Smoothness | sec | 2400 | 1200 | 1600 | 1200 | 1200 | 1200 | 1200 |
| | | Coefficient of kinetic friction | - | 0.19 | 0.18 | 0.30 | 0.18 | 0.18 | 0.18 | 0.18 |
| | Oxygen permeability | | mL/m²·day· atm | 0.2 | 0.2 | 0.2 | 0.2 | 0.8 | 0.4 | 0.2 |
| | Water vapor permeability | | g/m²·day | 0.2 | 0.2 | 0.2 | 0.2 | 0.6 | 0.4 | 0.2 |
| Evaluation | Printability | | | A | A | A | A | A | A | A |
| | Processing suitability | Cracking and scraping of pigment coating layer | - | A | B | A | B | B | B | B |
| | | Transportability in automatic packaging machine | - | A | A | B | A | A | A | A |
| Evaluation of packaging bag | Appearance | | - | A | A | A | A | A | A | A |
| | Gas barrier property | | - | A | A | A | A | A | A | A |

| | | | | Examples | | | | | | |
|---|---|---|---|---|---|---|---|---|---|---|
| | | | | 8 | 9 | 10 | 11 | 12 | 13 | |
| Base paper for vapor deposition paper | Paper substrate | Type | - | One-side machine glazed paper | | | | | | |
| | Clay coat layer | Coating amount | g/m² | 10 | 10 | 10 | 10 | 10 | 10 | |
| | Resin layer | Coating amount | g/m² | 1 | 1 | 1 | 1 | 1 | 1 | |
| | Pigment coating layer | Type of coating liquid | - | D | D | D | D | D | D | |
| | | Blending amount of pigment | Parts by mass | 80 | 80 | 80 | 80 | 80 | 80 | |
| | | Blending amount of binder | Parts by mass | 20 | 20 | 20 | 20 | 20 | 20 | |
| | | Coating amount | g/m² | 10 | 10 | 10 | 10 | 10 | 10 | |
| | Super calender | Number of stages | Stage | 12 | 12 | 6 | 2 | 12 | 12 | |
| Vapor deposition paper | Vapor deposition layer | Type | - | Al | Al | Al | Al | Al | Al | |
| | Overcoat layer | Type of resin | - | - | Urethane -based resin | - | - | - | - | |
| | | Coating amount | g/m² | - | 0.5 | - | - | - | - | |
| | Heat seal layer | Type of resin | - | Polyolefin dispersion | Ethylene-methacrylic acid copolymer | | | | | |
| | | Coating amount | g/m² | 3 | 3 | 3 | 3 | 3 | 3 | |
| Physical properties | Surface having a pigment coating layer | Smoothness | sec | 1200 | 1200 | 800 | 400 | 1200 | 1200 | |
| | | Coefficient of kinetic friction | - | 0.18 | 0.18 | 0.23 | 0.25 | 0.18 | 0.18 | |
| | Oxygen permeability | | mL/m²·day· atm | 0.2 | 0.2 | 0.2 | 0.2 | 0.3 | 0.1 | |
| | Water vapor permeability | | g/m²·day | 0.2 | 0.2 | 0.2 | 0.2 | 0.3 | 0.4 | |
| Evaluation | Printability | | - | A | A | B | B | A | A | |
| | Processing suitability | Cracking and scraping of pigment coating layer | - | B | B | B | B | B | B | |
| | | Transportability in automatic packaging machine | - | A | A | B | B | A | A | |
| Evaluation of packaging bag | Appearance | | - | A | A | A | A | A | A | |
| | Gas barrier property | | - | A | A | A | A | A | A | |

### Comparative Example 1

Base paper for vapor deposition paper and vapor deposition paper were obtained in the same manner as in Example 1 except that a pigment coating layer was not formed.

### Comparative Example 2

Base paper for vapor deposition paper and vapor deposition paper were obtained in the same manner as in Comparative Example 1, except that the 12-stage super calender treatment was not performed.

### Comparative Example 3

Base paper for vapor deposition paper and vapor deposition paper were obtained in the same manner as in Example 1, except that a resin coat coating liquid of 100 parts by mass (solid content) of a styrene-(meth)acrylic resin (trade name "ACRONAL S504" manufactured by BASF SE) was used instead of the pigment coating layer coating liquid A.

### Comparative Example 4

Thirty parts of finely powdered kaolin (trade name "Miragloss J" manufactured by BASF SE), 40 parts of light calcium carbonate (trade name "TP-123CS" manufactured by Okutama Kogyo Co., Ltd), and 30 parts of heavy calcium carbonate (trade name "Hydrocurve 90" manufactured by Bihoku Funka Kogyo Co., Ltd.) as solid contents, respectively were added to an aqueous solution prepared by adding 0.1 parts of sodium polyacrylate (trade name "ARON T-50" manufactured by Toagosei Co., Ltd.) as a dispersing agent to 100 parts of kaolin to be dispersed, and dispersed by a Cowles dispersing machine to prepare a pigment slurry. Base paper for vapor deposition paper and vapor deposition paper were obtained in the same manner as in Example 1, except that to this pigment slurry, 5 parts (solid content) of oxidized starch (trade name "OJI-ACE-A" manufactured by Oji Cornstarch Co., Ltd.) and 75 parts (solid content) of styrene-butadiene copolymer latex (trade name "OJ1000H" manufactured by JSR Corporation) as a binder were added to 20 parts (solid content) of pigment and the resultant was used as a pigment coating layer coating liquid E.

### Comparative Example 5

Thirty parts of finely powdered kaolin (trade name "Miragloss J" manufactured by BASF SE), 40 parts of light calcium carbonate (trade name "TP-123CS" manufactured by Okutama Kogyo Co., Ltd), and 30 parts of heavy calcium carbonate (trade name "Hydrocurve 90" manufactured by Bihoku Funka Kogyo Co., Ltd.) as solid contents, respectively were added to an aqueous solution prepared by adding 0.1 parts of sodium polyacrylate (trade name "ARON T-50" manufactured by Toagosei Co., Ltd.) as a dispersing agent to 100 parts of kaolin to be dispersed, and dispersed by a Cowles dispersing machine to prepare a pigment slurry.

Base paper for vapor deposition paper and vapor deposition paper were obtained in the same manner as in Example 1, except that to this pigment slurry, 5 parts (solid content) of oxidized starch (trade name "OJI-ACE-A" manufactured by Oji Cornstarch Co., Ltd.) and 5 parts (solid content) of styrene-butadiene copolymer latex (trade name "OJ1000H" manufactured by JSR Corporation) as a binder were added to 90 parts (solid content) of pigment to finally prepare and use a pigment coating layer coating liquid F having a solid content concentration of 60%.

The results of Comparative Examples 1 to 5 are shown in Table 2.

### [Table 2]

**Table 2**

| | | | | Comparative Example | | | | |
|---|---|---|---|---|---|---|---|---|
| | | | | 1 | 2 | 3 | 4 | 5 |
| Base paper for vapor deposition paper | Paper substrate | Type | - | One-side machine glazed paper | | | | |
| | Clay coat layer | Coating amount | g/m² | 12 | 12 | 12 | 12 | 12 |
| | Resin layer | Coating amount | g/m² | 1 | 1 | 1 | 1 | 1 |
| | Pigment coating layer | Type of coating liquid | - | - | - | Resin coat | E | F |
| | | Blending amount of pigment | Parts by mass | - | - | 0 | 20 | 90 |
| | | Blending amount of binder | Parts by mass | - | - | 100 | 80 | 10 |
| | | Coating amount | g/m² | - | - | 10 | 10 | 10 |
| | Super calender | Number of stages | Stage | 12 | - | 12 | 12 | 12 |
| Vapor deposition paper | Vapor deposition layer | Type | - | Al | Al | Al | Al | Al |
| | Overcoat layer | Type of resin | - | - | - | - | - | - |
| | | Coating amount | g/m² | - | - | - | - | - |
| | Heat seal layer | Type of resin | - | Ethylene-methacrylic acid copolymer | | | | |
| | | Coating amount | g/m² | 3 | 3 | 3 | 3 | 3 |
| Physical properties | Surface having a pigment coating layer | Smoothness | sec | 150 | 70 | 13000 | 10000 | 1000 |
| | | Coefficient of kinetic friction | - | 0.15 | 0.20 | -*1 | 0.45 | 0.17 |
| | Oxygen permeability | | mL/m²·day·atm | 0.2 | 0.2 | 0.2 | 0.2 | 0.2 |
| | Water vapor permeability | | g/m²·day | 0.2 | 0.2 | 0.2 | 0.2 | 0.2 |
| Evaluation | Printability | | - | B | C | A | A | B |
| | Processing suitability | Cracking and scraping of pigment coating layer | - | - | - | A | A | C |
| | | Transportability in automatic packaging machine | - | B | B | C | C | A |
| Evaluation of packaging bag | Appearance | | - | B | B | C | C | A |
| | Gas barrier property | | - | A | A | C | C | A |

| | | | | | | | | |
|---|---|---|---|---|---|---|---|---|
| *1: too high to measure | | | | | | | | |

The vapor deposition papers produced using the base papers for vapor deposition paper of Examples were excellent in printability and processing suitability. In addition, the vapor deposition papers produced using the base papers for vapor deposition paper of Examples were also excellent in the appearance of the packaging bag.

## Claims

1. Base paper for vapor deposition paper, which comprises a resin layer on one surface of a paper substrate and is for forming a vapor deposition layer on the resin layer, wherein
the base paper for vapor deposition paper comprises a pigment coating layer on the other surface of the paper substrate,
a content of a pigment in the pigment coating layer is 50% by mass or more and 85% by mass or less, and
the surface having the pigment coating layer has an Oken type smoothness of 300 seconds or more and a coefficient of kinetic friction against stainless steel of 0.35 or less.

2. The base paper for vapor deposition paper according to claim 1, further comprising a clay coat layer between the paper substrate and the resin layer.

3. The base paper for vapor deposition paper according to claim 1 or 2, wherein the resin layer contains at least one selected from the group consisting of a water-suspendable polyurethane-based resin and a water-suspendable polyester-based resin.

4. The vapor deposition paper according to claim 1 or 2, wherein the resin layer contains a water-soluble polyvinyl alcohol-based resin.

5. Vapor deposition paper comprising a vapor deposition layer on a resin layer of base paper for the vapor deposition paper having the resin layer on one surface of a paper substrate and a pigment coating layer on the other surface of the paper substrate, wherein
a content of a pigment in the pigment coating layer is 50% by mass or more and 85% by mass or less, and
the surface having the pigment coating layer has an Oken type smoothness of 300 seconds or more and a coefficient of kinetic friction against stainless steel of 0.35 or less.

6. The vapor deposition paper according to claim 5, further comprising a heat seal layer on the vapor deposition layer.

7. The vapor deposition paper according to claim 6, further comprising an overcoat layer between the vapor deposition layer and the heat seal layer.

8. The vapor deposition paper according to any one of claims 5 to 7, further comprising a clay coat layer between the paper substrate and the resin layer.

9. The vapor deposition paper according to any one of claims 5 to 8, wherein the resin layer contains at least one selected from the group consisting of a water-suspendable polyurethane-based resin and a water-suspendable polyester-based resin.

10. The vapor deposition paper according to any one of claims 5 to 8, wherein the resin layer contains a water-soluble polyvinyl alcohol-based resin.

11. A packaging bag formed using the vapor deposition paper according to any one of claims 5 to 10.
